# EUROPÄISCHE PATENTSCHRIFT

(11) **EP 0 827 896 B1**
(45) Veröffentlichungstag und Bekanntmachung des Hinweises auf die Patenterteilung: **21.11.2001**
(21) Anmeldenummer: 97114532.1
(22) Anmeldetag: 22.08.1997
(51) Int. Cl.: B62D 21/02, B62D 21/09

(54) **Hilfsrahmen für ein Nutzfahrzeug**
Subframe for utility vehicle
Châssis auxiliaire pour véhicule utilitaire

(30) Priorität: 05.09.1996 DE 19636026
(43) Veröffentlichungstag der Anmeldung: 11.03.1998
(73) Patentinhaber: DaimlerChrysler AG, 70567 Stuttgart (DE)
(72) Erfinder: Gross, Karlheinz, 70771 Leinfelden-Echterdingen (DE); Martin, Gerd, 70327 Stuttgart (DE)

(56) Entgegenhaltungen:
- AU-A- 8 414 775
- DE-U- 9 300 850
- GB-A- 1 131 562

## Beschreibung

Die Erfindung betrifft einen Hilfsrahmen für ein Nutzfahrzeug, der zur Verstärkung des aus Längs- und Querträgern bestehenden Hauptrahmens bei Fahrzeugen mit Sonderaufbauten vorgesehen ist.

Hilfsrahmen dieser Art sind bekannt (DE-GM 66 03 214). Diese bekannten Hilfsrahmen werden dem Hauptrahmen, beispielsweise eines Lastkraftwagens, zugeordnet, wenn das Fahrzeug mit einem Aufbau für eine stärkere Belastung versehen werden soll, die den Rahmen stark auf Biegung und Verdrehung beansprucht. Solche Fahrzeuge sind beispielsweise Fahrzeuge zum Mischen von Zement und insbesondere mit einem Kran ausgerüstete Nutzfahrzeuge, die mit einem mittig oder außermittig angeordneten Kranaufbau versehen werden sollen.

Bei der bekannten Bauart wird dabei ein kompletter Hilfsrahmen vorgesehen, der oben auf den Hauptrahmen aufgesteckt und mit diesem verschweißt oder vernietet wird. Diese Ausgestaltung führt zu einer wesentlichen Erhöhung des gesamten Fahrzeugrahmens, weil nun zwei Rahmen übereinander angeordnet sind. Die Folge ist, daß der Aufbau entsprechend niedriger bleiben muß.

Das gilt im wesentlichen auch für andere bekannte Rahmen von Nutzfahrzeugen (DE 35 35 634 C2), wo zum Zweck des Aufbaues eines Koffers auf den Hauptrahmen des Fahrzeuges ein Zusatzrahmen aufgesetzt ist.

Es gibt auch Hilfsrahmenkonstruktionen, bei denen zusätzlich der Fahrgestellängsträger durch Ein- oder Auflagen verstärkt wird, was zunächst aber eine Demontage von Querträgern, Konsolen und dergleichen erforderlich macht.

Der Erfindung liegt die Aufgabe zugrunde, Hilfsrahmen der eingangs genannten Art, die vormontiert werden können, so auszubilden, daß die Gesamtrahmenhöhe nicht zu groß wird.

Zur Lösung dieser Aufgabe ist ein Hilfsrahmen der eingangs genannten Art gekennzeichnet durch zwei Rahmenteilprofile, von denen eines oben auf den Hauptrahmen und das andere unter den Hauptrahmen setzbar ist und dadurch, daß beide Rahmenteilprofile mit Hilfe von abstehenden und sich jeweils überlappenden Laschen untereinander verschraubbar sind, die zwischen sich Aussparungen für die Querträger des Hauptrahmens freilassen.

Durch diese Ausgestaltung befinden sich die Querträger des Hauptrahmens und auch dessen Längsträger etwa im neutralen Faserbereich zwischen oberem und unterem Rahmenteilprofil, so daß neben dem Vorteil, daß nur noch eine teilweise Erhöhung des Hauptrahmens vorliegt, auch die Biegebeanspruchungen um die Fahrzeugquerachse auf den Längsträger des Hauptrahmens nicht mehr so groß sind, wie bei gängigen Hilfsrahmenverstärkungen. Der Profilschwerpunkt wird durch die erfindungsgemäße Anordnung in die Mitte des Gesamtprofils gelegt. Hierdurch können auch optimale Randfaserabstände sowie große Widerstandsmomente bei relativ geringem Materialeinsatz erreicht werden. Die Gewichtserhöhung durch die Anordnung des Hilfsrahmens kann daher verhältnismäßig klein gehalten werden.

Dadurch, daß die von dem oberen und unteren Rahmenteilprofil abstehenden Laschen zwischen sich Platz für die Querträger des Hauptrahmens belassen, ist eine Demontage von Querträgern, Anbauteilen, Konsolen oder dergleichen oder die notwendige Anpassung der Querträger infolge von in den Hauptrahmen eingefügten Einlagen nicht notwendig. Auch der Hilfsrahmen gemäß der Erfindung kann vorgefertigt und dann ohne großen Aufwand an den Hauptrahmen des Fahrgestells angesetzt und verschraubt werden.

Die Gesamtmontagezeiten können dadurch erheblich reduziert werden, verglichen mit den üblichen Montagen, bei denen die Anpassung des Hauptrahmens notwendig war.

In Weiterbildung der Erfindung kann das obere Rahmenteilprofil aus einem Hohlprofil bestehen, das untere dagegen in einfacher Weise aus L- oder T-Trägern. Die Verschraubung der Laschen erfolgt zweckmäßig durch Paßschrauben, und es wird vorteilhaft vorgesehen, daß die Laschen zum Zusammenfügen der beiden Rahmenteilprofile innerhalb des Hauptrahmens verlaufen. Wird zusätzlich vorgesehen, daß die Rahmenteilprofile durch eine außen die Längsträger übergreifende L-förmige Auflage untereinander verbunden werden, so kann eine weitere Verstärkung erreicht werden.

Die Erfindung ist in der Zeichnung anhand eines Ausführungsbeispieles dargestellt und wird im folgenden erläutert. Es zeigen:
- Fig. 1: die Seitenansicht des Heckendes des Fahrzeughauptrahmens eines Nutzfahrzeuges, und
- Fig. 2: die vergrößerte Darstellung des Schnittes nach der Linie II-II in Fig. 1.

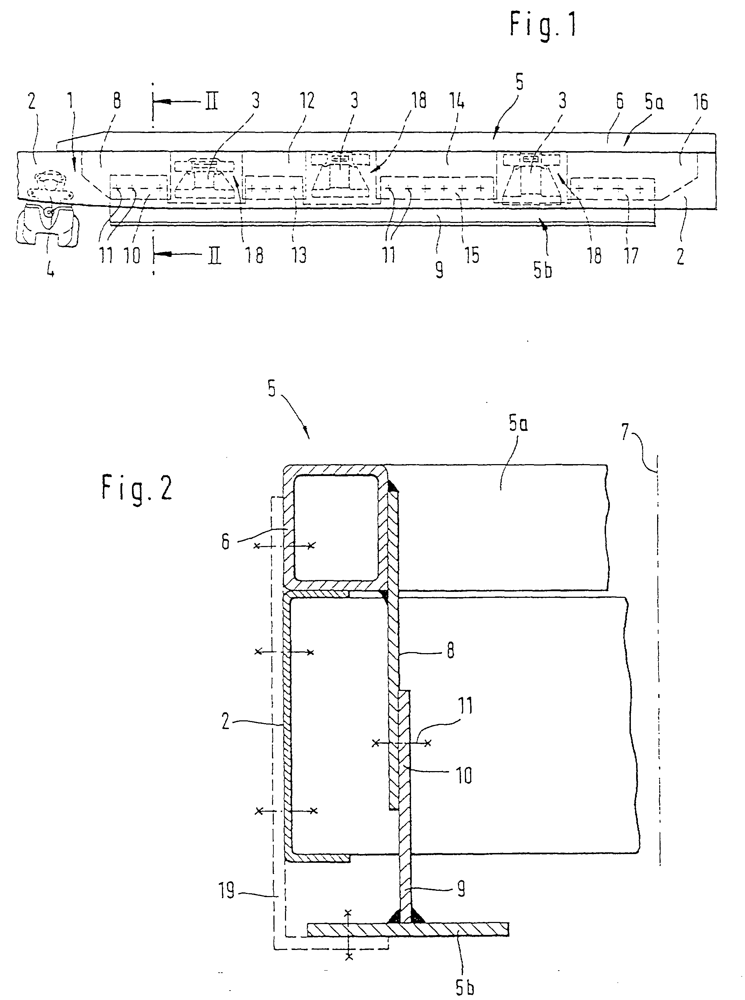

In der Fig. 1 ist einer der Längsträger 2 eines Fahrzeughauptrahmens 1 gezeigt, der mit einem zweiten, ebenfalls in der Fahrzeuglängsrichtung angeordneten, aber nicht gezeigten Längsträger über mehrere Querträger 3 und 4 verbunden ist. Dieser, in üblicher Weise ausgebildete Fahrzeughauptrahmen 1 kann dazu dienen, um übliche Nutzfahrzeugaufbauten, wie beispielsweise eine Ladefläche eines Lastkraftwagens oder dergleichen aufzunehmen. Die Stabilität des Hauptrahmens 1 reicht aber in bekannter Weise nicht dazu aus, wenn das Nutzfahrzeug mit Sonderaufbauten, z.B. mit einem Kranaufbau versehen werden soll.

Um hier die notwendige Verstärkung des Fahrzeughauptrahmens 1 zu erreichen, wird durch die Erfindung vorgeschlagen, einen Hilfsrahmen 5 vorzusehen, der aus einem oberen Rahmenteilprofil 5a und einem unterem Rahmenteilprofil 5b besteht. Das obere Rahmenteilprofil 5a ist dabei aus einem Hohlprofil 6 aufgebaut, das oben auf dem Längsträger 2 des Fahrzeughauptrahmens aufgesetzt ist und mit parallel zu der Fahrzeugmittelebene 7 nach unten verlaufenden Laschen 8 versehen ist, die an die außenliegende Hohlprofile 6 so angeschweißt sind, daß sie innerhalb des Fahrzeughauptrahmens 1, d.h. auf der zur Fahrzeugmittelebene 7 gelegenen Seite der Längsträger 2 liegen. Es versteht sich, daß dem nicht gezeigten, aber parallel zum Längsträger 2 verlaufenden rechten Längsträger des Fahrzeughauptrahmens 1 eine spiegelbildliche Anordnung der Laschen und der Hohlprofile 6 zugeordnet ist. Die Beschreibung beschränkt sich daher auf die Ausgestaltung des Hilfsrahmens 5 am linken Längsträger 2.

Das untere Rahmenteilprofil 5b wird beim Ausführungsbeispiel von einem T-Profil 9 gebildet, dessen Mittelsteg ab einer bestimmten Profilhöhe ebenfalls in Laschen 10 übergeht, die durch schematisch dargestellte Paßschrauben 11 mit den Laschen 8 des oberen Rahmenteilprofils 5a verschraubt sind. Die Laschen 8 stehen daher vom oberen Rahmenteilprofil 5a nach unten ab, die Laschen 10 vom unteren Rahmenteilprofil 5b nach oben. Diese Laschen 8 und 10, die gemäß Fig. 1 am vorderen Teil des Hilfsrahmens 5 angeordnet sind, sind durch weitere Laschenpaare 12, 13, 14, 15 und 16, 17 ergänzt, die über die Länge des oberen Hohlprofiles 6 und des unteren T-Profiles 9 versetzt zueinander so angeordnet sind, daß zwischen ihnen jeweils Aussparungen 18 für die Querträger 3 des Fahrzeughauptrahmens 1 verbleiben. Auf diese Weise kann der vormontierte Hilfsrahmen 5, der zweiteilig vorliegt, ohne weiteres von oben und von unten an den Fahrzeughauptrahmen 1 angesetzt werden und bildet nach seiner Verschraubung die notwendige Verstärkung des Fahrzeughauptrahmens 1. Dabei ist der Fahrzeugrahmen nur um die Höhe des Hohlprofiles 6 erhöht worden, bietet aber dennoch zum einen die notwendige Verstärkung, zum anderen den Vorteil, daß der Untergurt des Fahrzeughauptrahmens 1 nicht im Randfaserbereich des Gesamtprofiles liegt. Durch die erfindungsgemäße Ausgestaltung kann man den Profilgesamtschwerpunkt des Fahrzeughauptrahmens 1 ohne Demontage von Querträgern, Konsolen oder dergleichen in die Mitte des Gesamtprofils, bestehend aus Hauptrahmen 1 und Hilfsrahmen 2, legen. Die Beanspruchungen des Fahrzeughauptrahmens 1 sind daher geringer. Die Rahmenteilprofile des Hilfsrahmens 1 können aus einem höherfesten Werkstoff hergestellt werden als der Fahrzeughauptrahmen 1, um den höheren Beanspruchungen, die in den Randfaserbereichen des Gesamtprofiles auftreten, Rechnung zu tragen.

Möglich ist es schließlich auch noch, die Torsionssteifigkeit des Gesamtrahmens, die ausschlaggebend für die Standsicherheit des Fahrzeuges ist, durch eine L-förmige Auflage 19 zu verstärken, durch die die beiden Rahmenprofile 5a und 5b zu einem Kastenquerschnitt verbunden werden, der dem Fahrgestell eine sehr hohe Gesamtsteifigkeit verleiht. Die Befestigung der L-förmigen Auflage 19 kann durch Schraubverbindungen erfolgen, wie durch zur Paßschraube 11 analoge Achslinien in Fig. 2 angedeutet ist. Auf der gegenüberliegenden, der Fahrzeugmittelebene 7 zugewandten Seite, wären in diesem Fall Durchbrüche als Montagelöcher in den Laschen 8 und 10 vorzusehen (nicht gezeigt).

## Patentansprüche

1. Hilfsrahmen (5) für ein Nutzfahrzeug, der zur Verstärkung des aus Längs- und Querträgern (2, 3) bestehenden Fahrzeughauptrahmens (1) bei Fahrzeugen mit Sonderaufbauten vorgesehen ist,
**gekennzeichnet durch**
zwei Rahmenteilprofile (5a, 5b), von denen eines (5a) oben auf den Fahrzeughauptrahmen (1) und das andere (5b) unter den Fahrzeughauptrahmen setzbar ist und **dadurch**, **daß** beide Rahmenteilprofile (5a, 5b) mit Hilfe von abstehenden und sich jeweils überlappenden Laschen (8, 10, 12 bis 17) untereinander verschraubbar sind, die zwischen sich Aussparungen (18) für die Querträger (3) des Fahrzeughauptrahmens (1) freilassen.

2. Hilfsrahmen nach Anspruch 1,
**dadurch gekennzeichnet, daß**
das obere Rahmenteilprofil (5a) aus einem Hohlprofil (6) gebildet ist.

3. Hilfsrahmen nach Anspruch 1 oder 2,
**dadurch gekennzeichnet, daß**
das untere Rahmenteilprofil (5b) aus im Querschnitt L- oder T-förmigen Trägern (9) gebildet ist.

4. Hilfsrahmen nach Anspruch 1,
**dadurch gekennzeichnet, daß**
die Laschen (8, 10, 12 bis 17) durch Paßschrauben (11) untereinander verbunden sind.

5. Hilfsrahmen nach Anspruch 1,
**dadurch gekennzeichnet, daß**
die Laschen (8, 10, 12 bis 17) der Rahmenteilprofile (5a, 5b) innerhalb des Fahrzeughauptrahmens (1) verlaufen.

6. Hilfsrahmen nach Anspruch 1 oder einem der übrigen Ansprüche,
**dadurch gekennzeichnet, daß**
die Rahmenteilprofile (5a, 5b) durch eine die Längsträger (2) des Fahrzeughauptrahmens (1) außen übergreifende L-förmige Auflage (19) untereinander verbunden sind.

## Claims

1. Auxiliary frame (5) for a utility vehicle, which for the purpose of strengthening the vehicle main frame (1) consisting of longitudinal and cross carriers (2, 3) is provided with vehicles with special structures,
**characterised by**
two frame part profiles (5a, 5b), of which one (5a) can be placed above on the vehicle main frame (1) and the other (5b) can be placed below the vehicle main frame, and in that both frame part profiles (5a, 5b) can be screwed together with the assistance of protruding tongues (8, 10, 12 to 17) overlapping each other, which between them release recesses (18) for the cross carriers (3) of the vehicle main frame (1).

2. Auxiliary frame according to Claim 1
**characterised in that**
the upper frame part profile (5a) is formed from a hollow profile (6).

3. Auxiliary frame according to Claim 1 or 2
**characterised in that**
the lower frame part profile (5b) is formed from carriers with L-shaped or T-shaped cross-section.

4. Auxiliary frame according to Claim 1
**characterised in that**
the tongues (8, 10, 12 to 17) are connected to each other by means of dowel screws.

5. Auxiliary frame according to Claim 1
**characterised in that**
the tongues (8, 10, 12 to 17) of the frame part profiles (5a, 5b) run within the vehicle main frame (1).

6. Auxiliary frame according to Claim 1 or any of the other claims
**characterised in that**
the frame part profiles (5a, 5b) are connected to each other by an L-shaped bearing support (19) overlapping externally the longitudinal carriers (2) of the vehicle main frame (1).

## Revendications

1. Châssis auxiliaire (5) pour un véhicule utilitaire qui est prévu pour renforcer le châssis principal du véhicule (1), constitué de poutres longitudinales et transversales (2, 3), dans le cas des véhicules à carrosserie spéciale,
**caractérisé par**
deux profilés partiels (5a, 5b) de châssis, dont l'un (5a) peut se placer en haut sur le châssis principal du véhicule (1) et dont l'autre (5b) peut se placer sous le châssis principal du véhicule, et par le fait que les deux profilés partiels (5a, 5b) du cadre peuvent se visser l'un à l'autre à l'aide de goussets (8, 10, 12 à 17) qui en saillent, se recouvrent respectivement et laissent libres entre eux des évidements (18) pour les poutres transversales (3) du châssis principal du véhicule (1).

2. Châssis auxiliaire selon la revendication 1,
**caractérisé par le fait**
**que** le profilé partiel supérieur (5a) de châssis est formé d'un profilé creux (6).

3. Châssis auxiliaire selon la revendication 1 ou deux,
**caractérisé par le fait**
**que** le profilé partiel inférieur (5b) de châssis est formé de poutres (9) en forme de L ou de P en coupe.

4. Châssis auxiliaire selon la revendication 1,
**caractérisé par le fait**
**que** les goussets (8, 10, 12 à 17) sont réunis entre eux par des boulons ajustés (11).

5. Châssis auxiliaire selon la revendication 1,
**caractérisé par le fait**
**que** les goussets (8, 10, 12 à 17) des profilés partiels (Sa, 5b) de châssis passent à l'intérieur du châssis principal du véhicule (1).

6. Châssis auxiliaire selon la revendication 1 ou l'une des autres revendications,
**caractérisé par le fait**
**que** les profilés partiels (5a, 5b) de châssis sont réunis entre eux par un revêtement (19) en forme de L qui vient en prise, par-dessus et à l'extérieur, avec les poutres longitudinales (2) du châssis principal du véhicule (1).
